# EUROPEAN PATENT APPLICATION

(11) **EP 2 233 244 A1**
(43) Date of publication of application: **29.09.2010**
(21) Application number: 08861124.9
(22) Date of filing: 09.12.2008
(51) Int. Cl.: B23Q 1/52, B23Q 16/02, B23Q 16/10

(54) **ROTATION-INDEXING TABLE APPARATUS FOR MACHINE TOOL**

(30) Priority: 19.12.2007 JP 2007326693
(71) Applicant: Tsudakoma Kogyo Kabushiki Kaisha, Kanazawa-shi, Ishikawa 921-8650 (JP)
(72) Inventor: TATSUDA, Yoshinori, Kanazawa-shi Ishikawa 921-8650 (JP); NISHITA, Yoichi, Kanazawa-shi Ishikawa 921-8650 (JP)
(74) Representative: Samson & Partner
(86) International application number: PCT/JP2008/072309
(87) International publication number: WO 2009/078308

(57) **Abstract**

In a rotary indexing table device 1 for a machine tool includes a rotating shaft 4 supported rotatably relative to a fixed frame 2 by a bearing 3, a circular table 5 provided at one end of the rotating shaft 4 in a manner such that a workpiece is to be mounted thereon, and drive means 6 for rotating the rotating shaft 4. The drive means 6 is formed by a direct drive motor 9 including a motor rotor 7 provided concentrically with an axis of the rotating shaft 4 in a manner such as to be unrotatable relative to the rotating shaft 4 and a motor stator 8 provided in the fixed frame 2 in a manner such as to face an outer peripheral surface of the motor rotor 7. The bearing 3 is provided on an inner side of the motor rotor 7 in a radial direction, and at least a part of the bearing 3 is provided within an existence area of the direct drive motor 9 in an axial direction of the rotating shaft 4. This reduces of the dimension of the rotary indexing table device 1 in the axial direction of the rotating shaft.

## Description

### Technical Field

The present invention relates to a rotary indexing table device for a machine tool that indexes a circular table, which is supported by a rotating shaft and on which a workpiece serving as a work target is to be mounted, to a predetermined rotation angle by rotating the circular table.

### Background Art

Patent Document 1 describes one related art relating to the above-described rotary indexing table device. In the rotary indexing table device of Patent Document 1, a direct drive motor (a so-called direct drive motor, hereinafter also referred to as a DD motor) that rotates a rotating shaft not via a drive transmission means, such as a gear, is used as a drive means for the rotating shaft. Further, in the rotary indexing table device of Patent Document 1, a DD motor of a so-called inner rotor type in which a motor stator surrounds a motor rotor is adopted as the DD motor.

In the above-described rotary indexing table device of Patent Document 1, a bearing for rotatably supporting the rotating shaft relative to a fixed frame is provided outside an existence area of the DD motor in an axial direction of the rotating shaft, more specifically, is shifted from the DD motor toward a circular table.

For this reason, the dimension of the rotary indexing table device in the above-described axial direction is at least the sum of the dimensions of the DD motor and the bearing in the axial direction, and this increases the dimension of the device itself in the axial direction.

As a result, when the rotary indexing table device is mounted in a machine tool, the distance from a table surface of the machine tool to a workpiece (working position) is long. Hence, a force (moment) applied to a mounting surface of the rotary indexing table device on the machine tool during working increases, the mounting rigidity with respect to the load decreases, and the mounting state of the device lacks stability. Further, the size of a workpiece mounted on the circular table is limited in relation to the machine tool, and it is sometimes impossible to respond to a large workpiece.

Patent Document 2 describes another related art relating to the above-described rotary indexing table device. In the rotary indexing table device of Patent Document 2, the above-described DD motor is also used as a drive means for a rotating shaft. However, the rotary indexing table device of Patent Document 2 adopts a DD motor of a so-called outer rotor type in which a motor rotor surrounds a motor stator. Further, in the rotary indexing table device of Patent Document 2, the rotating shaft is supported relative to a fixed frame by a plurality of bearings, and most of the bearings are located within an existence area of the DD motor in the axial direction of the rotating shaft.

In the rotary indexing table device of Patent Document 2, a part of the rotating shaft surrounds the motor rotor in the DD motor of the outer rotor type, and the above-described bearings are provided to surround the part of the rotating shaft. For this reason, the diameter of bearings to be used becomes large inevitably.

However, since the run-out precision decreases as the diameter of the bearings increases, the indexing accuracy correspondingly decreases, and as a result, the working accuracy decreases. Further, since the bearings become more expensive as the diameter thereof increases, the manufacturing cost of the device increases.
Patent Document 1: Japanese Unexamined Utility Model Registration Application Publication No. 4-136632
Patent Document 2: Japanese Unexamined Patent Application Publication No. 4-2443

### Disclosure of Invention

### Problems to be Solved by the Invention

Therefore, an object of the present invention is to reduce the dimension of a rotary indexing table device for a machine tool in an axial direction of a rotating shaft. Means for Solving the Problems

Under the above-described problems, the present invention provides a rotary indexing table device (1) for a machine tool, including a rotating shaft (4) supported rotatably relative to a fixed frame (2) by a bearing (3); a circular table (5) provided at one end of the rotating shaft (4) in a manner such that a workpiece is to be mounted thereon; and drive means (6) for rotating the rotating shaft (4), the drive means (6) being formed by a direct drive motor (9) including a motor rotor (7) provided concentrically with the rotating shaft (4) in relation to an axis of the rotating shaft (4) in a manner such as to be unrotatable relative to the rotating shaft (4) and a motor stator (8) provided in the fixed frame (2) in a manner such as to face an outer peripheral surface of the motor rotor (7). The bearing (3) is provided on an inner side of the motor rotor (7) in a radial direction, and at least a part of the bearing (3) is provided within an existence area of the direct drive motor (9) in an axial direction of the rotating shaft (4). Incidentally, the rotary indexing table device (1) is also called an index table or a rotary table. Further, the direct drive motor (9) serving as the drive means of the present invention is a DD motor of an inner rotor type, of the above-described DD motors.

Further, in the rotary indexing table device (1) for the machine tool, clamp means (10) for holding an indexed angular position of the rotating shaft (4) is provided in the fixed frame (2), and at least a part of a clamp portion (31, 32, 36 and 43, 44, 48) of the clamp means (10) is provided within the existence area of the motor (9) in the axial direction of the rotating shaft (4). As the clamp means (10), a known clamp device of a clamp sleeve type, a clamp disc type, or the like is used.

In order to rotatably support the rotating shaft (4), the bearing (3) is formed by one or two or more bearings, and at least a part of the bearing (3), in other words, at least a part of the one bearing (3) or at least one of the two or more bearings (3) is provided within the existence area of the motor (9).

In addition, the fixed frame (2) has a cylindrical base portion (11) on the inner side of the motor rotor (7) in the radial direction and within the existence area of the motor (9) in the axial direction of the rotating shaft (4), and the base portion (11) supports the bearing (3) on an inner peripheral side thereof and faces the clamp means (10) on an outer peripheral side thereof.

### Advantages

According to the present invention, the direct drive motor (9) of the inner rotor type provided in the fixed frame (2) is used as the drive means for the rotating shaft (4), and the bearing (3) for supporting the rotating shaft (4) is located on the inner side of the motor rotor (7) in the radial direction in a manner such that at least a part of the bearing (3) is located within the existence area of the direct drive motor (9) in the axial direction of the rotating shaft (4). Hence, the dimension of the rotary indexing table device (1) in the axial direction can be reduced. As a result, a mounting state in the machine tool is stabilized, and it is possible to respond to a workpiece larger than before. Moreover, since a bearing having a small diameter can be adopted, a high working accuracy can be obtained, and the manufacturing cost of the rotary indexing table device for the machine tool can be reduced (Claim 1).

As for the clamp means (10) provided in the rotary indexing table device (1) so as to hold the indexed angular position of the rotating shaft (4), at least a part of the clamp portion of the clamp means (10) is located within the existence area of the direct drive motor (9) in the axial direction, and therefore, the dimension in the axial direction of the rotary indexing table device (1) can be made smaller than that of the structure in which the clamp means (10) is entirely located outside the existence area of the direct drive motor (9), and advantages similar to the above-described advantages of the bearing (3) can be obtained (Claim 2).

In addition, since the cylindrical base portion (11) of the fixed frame (2) is provided on the inner side of the motor rotor (7) in the radial direction and within the existence area of the direct drive motor (9) in the axial direction, supports the bearing (3) on the inner peripheral side, and faces the clamp means (10) on the outer peripheral side, the bearing (3) and the clamp means (10) can be rationally arranged within the existence area of the direct drive motor (9), and this is effective for size reduction of the device (Claim 3).

### Brief Description of Drawings

[Fig. 1] Fig. 1 is a cross-sectional view of a rotary indexing table device 1 for a machine tool according to the present invention.
[Fig. 2] Fig. 2 is a cross-sectional view of a rotary indexing table device 1 for a machine tool according to another embodiment of the present invention.

### Reference Numerals

- 1:: rotary indexing table device for machine tool
- 2:: fixed frame
- 3:: bearing
- 4:: rotating shaft
- 5:: circular table
- 6:: drive means
- 7:: motor rotor
- 8:: motor stator
- 9:: direct drive (DD) motor
- 10:: clamp means
- 11:: base portion
- 12:: mounting bolt
- 13:: center hole
- 14:: bearing presser
- 15:: bolt
- 16:: projecting portion
- 16a:: hole
- 17:: mounting bolt
- 18:: cover member
- 19:: oil seal
- 20:: rotation detector
- 21:: detected ring
- 22:: detection sensor
- 23:: holding portion
- 24:: mounting bolt
- 25:: stator sleeve
- 26:: mounting bolt
- 27:: mounting bolt
- 28:: casing body
- 29:: base member
- 31:: clamp portion
- 32:: clamp surface
- 33: flange portion:
- 34:: seal
- 35:: thin portion
- 36:: pressure chamber
- 37:: mounting bolt
- 38:: passage
- 39:: passage
- 40:: port
- 41:: pressure fluid source
- 42:: pressure fluid
- 43:: clamp disc
- 44:: piston
- 45:: return disc
- 46:: mounting portion
- 47:: mounting bolt
- 48:: clamp surface
- 49:: pressure chamber
- 50:: piston rod
- 51:: mounting bolt
- 52:: stopper
- 53:: mounting bolt
- 54:: groove

### Best Modes for Carrying Out the Invention

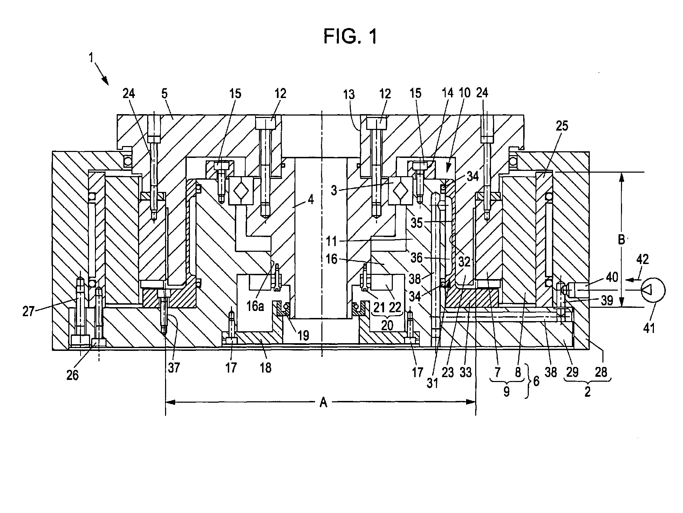

Fig. 1 illustrates a rotary indexing table device 1 for a machine tool according to the present invention. The rotary indexing table device 1 for the machine tool shown in Fig. 1 is an exemplary structure that adopts a clamp device of a clamp sleeve type as a clamp means 10. In the following description, "axial direction" indicates a direction of an axis of a rotating shaft 4 that supports a circular table 5, and "radial direction" indicates a radial direction of the rotating shaft 4, the circular table 5, and a DD motor 9 that are arranged concentrically.

In Fig. 1, the rotary indexing table device 1 for the machine tool includes the rotating shaft 4 rotatably supported by a bearing 3 relative to a fixed frame 2, the circular table 5 provided at one end of the rotating shaft 4 in manner such that a workpiece is to be mounted thereon, and a drive means 6 for rotating the rotating shaft 4. A surface of the fixed frame 2 to be mounted on the machine tool is a flat surface, and the fixed frame 2 has a cylindrical base portion 11 that surrounds the rotating shaft 4.

In the illustrated embodiment, the fixed frame 2 is formed by separately forming a casing body 28 and a base member 29 provided with the cylindrical base portion 11 and combining the casing body 28 and the base member 29 by a plurality of mounting bolts 27. However, the cylindrical base portion 11 may be separately formed as an independent member and may be attached by bolts or the like.

The rotating shaft 4 is fitted in the cylindrical base portion 11 inside the fixed frame 2, and is supported rotatably relative to the fixed frame 2 by the bearing 3. Further, the circular table 5 is fitted at a center hole 13 on one end of the rotating shaft 4, and is attached to the one end of the rotating shaft 4 by a plurality of mounting bolts 12 while being positioned by the fitting. In the illustrated embodiment, a cylindrical holding portion 23 is provided integrally with the circular table 5, and extends in the axial direction from a surface of the circular table 5 opposite an end surface (upper surface in Fig. 1) on which the workpiece is to be mounted. This holding portion 23 surrounds the base portion 11.

An inner ring of the bearing 3 is fitted on a bearing stepped portion provided on the outer periphery of the rotating shaft 4, and is clamped between a surface of the bearing stepped portion of the rotating shaft 4 and a surface of the circular table 5 around the center hole 13. Further, an outer ring of the bearing 3 lies on a bearing stepped portion provided on the inner periphery of the cylindrical base portion 11, and is fixed by an annular bearing presser 14 attached to an end surface of the base portion 11 by bolts 15. In this way, the rotating shaft 4 and the circular table 5 are rotatably supported relative to the fixed frame 2 by the bearing 3. While the rotating shaft 4 is rotatably supported relative to the base portion 11 of the fixed frame 2 by the single bearing 3 in this illustrated embodiment, two or more bearings 3 may be provided in combination between the rotating shaft 4 and the cylindrical base portion 11.

One end of the rotating shaft 4 is provided with the circular table 5, and the other end thereof is inserted in a hole 16a of a disc-shaped projecting portion 16 provided on an inner peripheral surface of the base portion 11 and further protrudes from the hole 16a. The rotation angle (rotation amount) of the rotating shaft 4 is detected by a rotation detector 20 including a detected ring 21 provided in the above-described protruding portion of the rotating shaft 4 and a detection sensor 22 provided on the projecting portion 16 of the base portion 11. Further, a space on the outer periphery of and at the other end of the rotating shaft 4 is closed by a cover member 18 attached to the base portion 11 by bolts 17 and an oil seal 19 held in contact with the outer periphery of the end of the rotating shaft 4 by the cover member 18.

The drive means 6 is formed by a DD motor 9 of an inner rotor type. This DD motor 9 is provided concentrically with the rotating shaft 4 in relation to the axis of the rotating shaft 4, and includes a motor rotor 7 that is unrotatable relative to the rotating shaft 4, and a motor stator 8 that is located with an inner peripheral surface thereof facing an outer peripheral surface of the motor rotor 7 with a small gap being disposed therebetween and that is unrotatable relative to the casing body 28 of the fixed frame 2.

The motor rotor 7 is attached to the circular table 5 by mounting bolts 24 inserted from the circular table 5 side while being fitted on an outer peripheral surface of the holding portion 23 of the circular table 5. In this way, at a position at a distance from the rotating shaft 4 in the radial direction, the motor rotor 7 is attached to the circular table 5 by the holding portion 23 provided integrally with the circular table 5, and is made unrotatable relative to the rotating shaft 4 to which the circular table 5 is fixed.

While the holding portion 23 is provided integrally with the circular table 5 in Fig. 1, it may be formed separately from the circular table 5 and fixed to the circular table 5. Alternatively, the holding portion 23 may be provided integrally with the rotating shaft 4, or may be separately formed and fixed to the rotating shaft 4.

On the other hand, the motor stator 8 is attached to the fixed frame 2 while the inner peripheral surface thereof faces the outer peripheral surface of the motor rotor 7 and a small gap is formed between the outer peripheral surface of the motor rotor 7 and the inner peripheral surface of the motor stator 8. In the illustrated embodiment, the motor stator 8 is fitted in an inner peripheral surface of a stator sleeve 25, which is fitted in an inner peripheral surface of the casing body 28 of the fixed frame 2, in a manner such as to be unrotatable relative to the stator sleeve 25. Further, the stator sleeve 25 is attached to the fixed frame 2 by mounting bolts 26 inserted from the side of the base member 29 of the fixed frame 2. Hence, in the fixed frame 2, the motor stator 8 is unrotatable relative to the fixed frame 2.

As described above, the bearing 3 is provided on the inner side of the motor rotor 7 of the DD motor 9 in the radial direction, that is, within a dimension A in the radial direction in the figure, and is provided in an existence area of the DD motor 9 in the axial direction,
that is, within a dimension B in the axial direction in the figure. In this embodiment, the dimension A coincides with the diameter of the inner circumference of the motor rotor 7, and the dimension B coincides with the length in the generator direction of the stator sleeve 25 that is the largest in the axial direction.

In the illustrated embodiment, the bearing 3 is provided within the dimension B and within the existence area of the DD motor 9 in the axial direction. However, it is only necessary that at least a part of the bearing 3 is provided within the existence area of the DD motor 9, as described above. Hence, a part of the bearing 3 may protrude from the existence area of the DD motor 9, that is, the dimension B. When the rotating shaft 4 is supported by two or more bearings 3, at least one of the two or more bearings may protrude from the existence area of the DD motor 9, that is, the dimension B.

As described above, the DD motor 9 is of an inner rotor type, and is formed by a combination of the motor rotor 7, the motor stator 8, and the stator sleeve 25. In the illustrated embodiment, the stator sleeve 25 has the largest dimension in the axial direction. Therefore, the existence area of the DD motor 9 in the axial direction is an existence area of the stator sleeve 25.

In the embodiment shown in Fig. 1, the bearing 3 for supporting the rotating shaft 4 rotatably relative to the fixed frame 2 is entirely located within the existence area of the DD motor 9 in the axial direction. In other words, the bearing 3 is located in a center through hole of the DD motor 9 (a space on the inner side of the inner peripheral surface of the motor rotor 7). By thus entirely locating the bearing 3 on the inner side of the DD motor 9 in the radial direction and within the existence area of the DD motor 9 in the axial direction, the dimension in the axial direction of the rotary indexing table device 1 for the machine tool can be reduced considerably.

In addition, the illustrated rotary indexing table device 1 includes, in the fixed frame 2, a clamp means 10 that holds the indexed angular position of the rotating shaft 4. In this embodiment, the clamp means 10 is a clamp device of a clamp sleeve type. The clamp means 10 includes a cylindrical clamp portion 31 located between the base portion 11 of the fixed frame 2 and the holding portion 23 of the circular table 5, and a flange portion 33 extending from the clamp portion 31 in the radial direction. The clamp portion 31 is fitted on the base portion 11, and the clamp means 10 is attached to the fixed frame 2 at the flange portion 33 by mounting bolts 37.

In the clamp means 10, the clamp portion 31 faces an inner peripheral surface of the holding portion 23, which serves as a clamp surface 32, in a non-contact manner, and is in tight contact with an outer peripheral surface of the base portion 11 with two seals 34 being disposed therebetween. Further, the clamp portion 31 has a groove on an inner peripheral surface thereof, and a portion corresponding to the groove serves as a thin portion 35. A space surrounded by an inner surface of the thin portion 35 and the outer peripheral surface of the base portion 11 serves as a pressure chamber 36 to which pressure fluid (e.g., pressure oil) for deforming the thin portion 35 is supplied. The pressure chamber 36 is connected to a pressure fluid source 41 via a passage 38 provided in the base member 29 of the fixed frame 2 and a passage 39 and a port 40 provided in the casing body 28. The pressure fluid source 41 supplies pressure fluid 42 to the pressure chamber 36 during clamp operation.

The clamp means 10 is located within the existence area of the DD motor 9 in the axial direction, and the clamp portion 31 is located on the inner side of the DD motor 9 in the radial direction. That is, the clamp means 10 is located in a manner such that the clamp portion 31, which is the main part of the clamp means 10 and occupies a great part of the structure, is provided in the center through hole of the DD motor 9 (the space on the inner side of the inner peripheral surface of the motor rotor 7).

In addition to the above-described structure of the bearing 3, when the clamp means 10 is thus entirely located within the existence area of the DD motor 9 in the axial direction, the dimension in the axial direction of the rotary indexing table device 1 can be reduced further. Moreover, in the rotary indexing table device 1 that adopts the clamp device of the clamp sleeve type as the clamp means 10, when the clamp portion 31 is provided within the existence area of the DD motor 9 in the axial direction of the rotating shaft 4, the dimension in the axial direction of the clamp portion 31 can be made large, and a large clamp force can be obtained. Further, in the rotary indexing table device 1 that adopts the DD motor 9 of the inner rotor type, when the clamp portion 31 is provided on the inner side of the DD motor 9 in the radial direction, the dimension in the radial direction of the rotary indexing table device 1 can be made smaller than when the clamp force is applied to the rotating shaft 4 on the outer side of the DD motor 9.

In this way, the rotary indexing table device 1 for the machine tool shown in Fig. 1 can have an extremely small dimension in the axial direction because of the configuration thereof. Hence, the mounting state of the rotary indexing table device 1 in the machine tool is stabilized, and it is possible to respond to a workpiece larger than before. Further, since the bearing 3 having a small diameter can be adopted, a high working accuracy can be obtained, and the manufacturing cost of the rotary indexing table device 1 can be reduced.

While the base portion 11 serving as a part of the fixed frame 2 is interposed between the rotating shaft 4 and the DD motor 9 (motor rotor 7, motor stator 8) in the rotary indexing table device 1 shown in Fig. 1, as described above, this structure is different from the structure of a general rotary indexing table device, and is necessary to locate the bearing 3 and the clamp means 10 within the existence area of the DD motor 9 in the axial direction, in other words, within the dimension B. In the illustrated embodiment, the cylindrical base portion 11 is provided within the dimension A and the dimension B, supports the bearing 3 on the inner peripheral side thereof, and faces the clamp means 10 on the outer peripheral side thereof.

During rotation of the circular table 5, an unillustrated control device of the DD motor 9 rotates the motor rotor 7 together with the rotating shaft 4 and the circular table 5 by a predetermined rotation angle (rotation amount) by generating a rotating magnetic field for the DD motor 9. In this case, the rotation angle (rotation amount) of the circular table 5 is detected by the rotation detector 20.

When the circular table 5 rotates by the predetermined rotation angle (rotation amount) and is indexed to a target rotation angle, the pressure fluid 42 is supplied from the pressure fluid source 41 to the pressure chamber 36. Hence, the clamp portion 31, particularly the thin portion 35 receives pressure from the pressure fluid 42 in the pressure chamber 36, deforms in a direction to increase the outer diameter, presses the outer peripheral surface thereof against the clamp surface 32 of the holding portion 23, applies a frictional braking force therebetween, and prevents rotation of the circular table 5 by the frictional force in this case, so that the circular table 5 is brought into a clamped state. Since the internal pressure of the pressure chamber 36 is decreased by stopping the supply of the pressure fluid 42, the outer peripheral surface of the thin portion 35 is separated from the clamp surface 32 of the holding portion 23, and the circular table 5 is brought into an unclamped state.

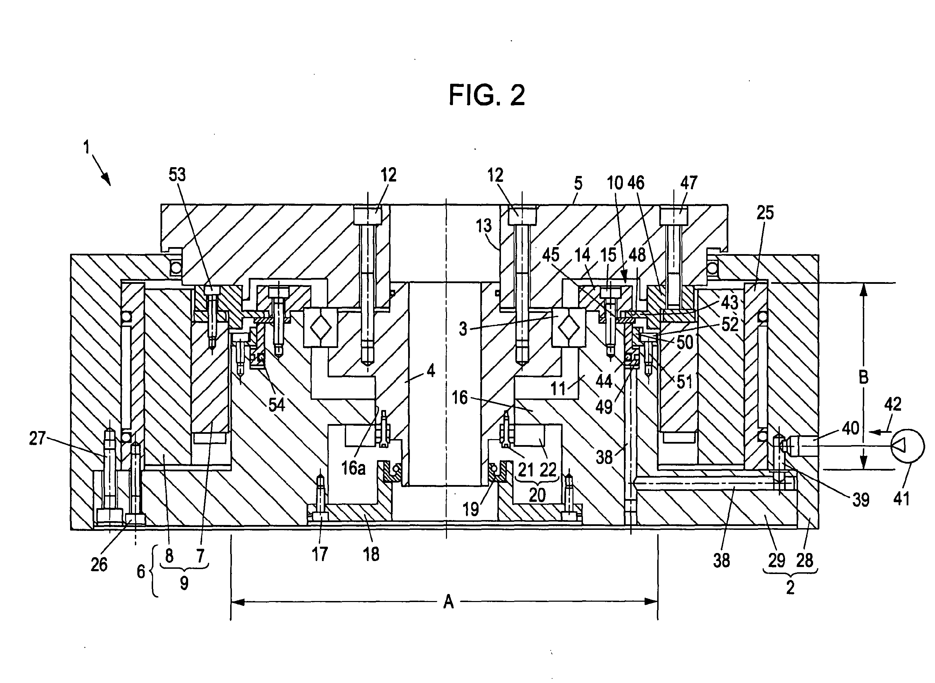

Next, a rotary indexing table device 1 according to another embodiment of the present invention will be described with reference to Fig. 2. The rotary indexing table device 1 shown in Fig. 2 is an exemplary structure that adopts a clamp device of a disc type as a clamp means 10. Structures other than the clamp means 10 are substantially similar to those adopted in the embodiment shown in Fig. 1. Therefore, components common to Fig. 1 are denoted by the same reference numerals in the figure, and descriptions of the components are omitted hereinafter.

In Fig. 2, the clamp means 10 includes a disc-shaped clamp disc 43, an annular piston 44, a disc-shaped return disc 45, etc. The clamp disc 43 is provided integrally with a mounting portion 46 on the outer peripheral side, and is attached to a circular table 5 at the mounting portion 46 by mounting bolts 47. Further, one inner peripheral surface of the clamp disc 43 (surface facing the circular table 5) faces a surface of a bearing presser 14 close to the clamp disc 43, which serves as a clamp surface 48, in a non-contact manner, and the other inner peripheral surface of the clamp disc 43 (surface close to a fixed frame 2) faces a surface of the return disc 45 in a non-contact manner.

Since the mounting portion 46 is attached to the circular table 5 in the embodiment shown in Fig. 2, a motor rotor 7 is attached to the mounting portion 46 by mounting bolts 53 to be combined with the circular table 5. The annular return disc 45 is attached to a base portion 11 together with a bearing presser 14 by mounting bolts 15.

The piston 44 is placed in an annular groove 54 provided in the base portion 11 in a manner such as to be movable in the axial direction. A space surrounded by the groove 54 and an end face of the piston 44 opposite the clamp disc 43 serves as a pressure chamber 49 to which pressure fluid for displacing the piston 44 is supplied. A passage 38 provided in the base portion 11 communicates with the pressure chamber 49 at a position facing the end face of the piston 44 opposite the clamp disc 43. The passage 38 is also connected to a pressure fluid source 41 via a passage 39 and a port 40 provided in a casing body 28.

A piston rod 50 provided integrally with the piston 44 faces the other inner peripheral surface of the clamp disc 43 (surface close to the fixed frame 2) with the return disc 45 being disposed therebetween. The return disc 45 is formed of an elastic material. When the piston rod 50 is displaced toward the clamp disc 43, the return disc 45 abuts a tip of the piston rod 50, and deforms to apply a pressing force to the clamp disc 43.

Further, a stopper 52 is attached to the base portion 11 by mounting bolts 51 in a manner such as to face a part of the piston 44. This stopper 52 serves to prevent the piston 44 from falling off, and also to guide movement of the piston rod 50 in the axial direction.

When the circular table 5 rotates by a predetermined angle (rotation amount) and is indexed to a target rotation angle, pressure fluid 42 is supplied from the pressure fluid source 41 to the pressure chamber 49. Consequently, the piston 44 placed at a retreat position is displaced from the retreat position in the axial direction, pushes the return disc 45 by the tip of the piston rod 50 against elastic force of the return disc 45, presses the clamp disc 43 against the clamp surface 48, and causes a frictional force to act therebetween. As a result, the clamp disc 43 and the circular table 5 that are provided integrally are prevented from rotating, by the frictional force between the clamp disc 43 and the clamp surface 48, and are brought into a clamped state.

Since the internal pressure of the pressure chamber 49 is decreased by stopping the supply of the pressure fluid 42, the piston 44 is returned to the retreat position by the elastic force of the return disc 45. Therewith, the clamp disc 43 is separated from the clamp surface 48. For this reason, the circular table 5 is brought into an unclamped state.

In the embodiment shown in Fig. 2, a clamp portion of the clamp means 10, that is, the clamp disc 43, the piston 44, and the clamp surface 48 in this embodiment are provided on the inner side of the motor rotor 7 in the radial direction, that is, within a dimension A, and within an existence area of a DD motor 9 in the axial direction, that is, within a dimension B, similarly to a bearing 3.

By thus locating the bearing 3 and the clamp portion of the clamp means 10 on the inner side of the DD motor 9 in the radial direction and within the existence area of the DD motor 9 in the axial direction, the dimension of the rotary indexing table device 1 in the axial direction can be reduced considerably.

While the bearing 3 is entirely located within the existence area of the DD motor 9 in the axial direction of the rotating shaft 4 in the above-described embodiments, the present invention is not limited thereto, and part of the bearing 3 may protrude from the existence area of the DD motor 9 in the axial direction, as described above. Alternatively, when the rotating shaft 4 is supported by a plurality of bearings 3, at least one of the bearings 3 may be located at the above-described position. In this case, the dimension in the axial direction of the rotary indexing table device 1 can be made smaller than when all of the bearings 3 are entirely located outside the existence area of the DD motor 9 in the axial direction.

In the present invention, the clamp portion of the clamp means 10 does not always need to be located on the inner side of the DD motor 9 in the radial direction and within the existence area of the DD motor 9 in the axial direction, and may be located on the outer side of the DD motor 9 in the radial direction and outside the existence area of the DD motor 9 in the axial direction.

Instead of the arrangement of the clamp means 10 in the axial direction in which the clamp means 10 is entirely located within the existence area of the DD motor 9 in the axial direction, as in the above-described embodiments, the clamp means 10 may be located in a manner such that only the clamp portion 31 or only a part of the clamp portion is located within the existence area of the DD motor 9 in the axial direction. For example, the flange portion in the embodiment shown in Fig. 1 or the mounting portion 46 in the embodiment shown in Fig. 2 may be located outside the existence area of the DD motor 9, and further, a part of the clamp portion may be located outside the existence area of the DD motor 9.

As for the position in the radial direction of the clamp portion of the clamp means 10, in order to reduce the dimension in the radial direction of the rotary indexing table device 1, it is preferable that the clamp portion be located on the inner side of the DD motor 9 in the radial direction as in the above-described embodiments. However, the present invention is not limited thereto, and the clamp means 10 may be located in a manner such that the clamp portion is located on the outer side of the DD motor 9 in the radial direction.

### Industrial Applicability

The rotary indexing table device for the machine tool according to the present invention is assembled into the machine tool in a manner such as to be incorporated in the machine tool or to be added later to various machine tools.

## Claims

1. A rotary indexing table device (1) for a machine tool, comprising a rotating shaft (4) supported rotatably relative to a fixed frame (2) by a bearing (3), a circular table (5) provided at one end of the rotating shaft (4) in a manner such that a workpiece is to be mounted thereon, and drive means (6) for rotating the rotating shaft (4),
the drive means (6) being formed by a direct drive motor (9) including a motor rotor (7) provided concentrically with the rotating shaft (4) in relation to an axis of the rotating shaft (4) in a manner such as to be unrotatable relative to the rotating shaft (4) and a motor stator (8) provided in the fixed frame (2) in a manner such as to face an outer peripheral surface of the motor rotor (7),
wherein the bearing (3) is provided on an inner side of the motor rotor (7) in a radial direction, and at least a part of the bearing (3) is provided within an existence area of the direct drive motor (9) in an axial direction of the rotating shaft (4).

2. The rotary indexing table device (1) for the machine tool according to Claim 1, wherein clamp means (10) for holding an indexed angular position of the rotating shaft (4) is provided in the fixed frame (2), and at least a part of a clamp portion (31, 32, and 36, 43, 44, and 48) of the clamp means (10) is provided within the existence area of the motor (9) in the axial direction of the rotating shaft (4).

3. The rotary indexing table device (1) for the machine tool according to Claim 2, wherein the fixed frame (2) has a cylindrical base portion (11) on the inner side of the motor rotor (7) in the radial direction and within the existence area of the motor (9) in the axial direction of the rotating shaft (4), and the base portion (11) supports the bearing (3) on an inner peripheral side thereof and faces the clamp means (10) on an outer peripheral side thereof.
